Europäisches Patentamt

(19) European Patent Office

Office européen des brevets

(11) EP 1 474 495 B1

(12) **EUROPEAN PATENT SPECIFICATION**

(45) Date of publication and mention
of the grant of the patent:
**28.06.2006 Bulletin 2006/26**

(21) Application number: **03707250.1**

(22) Date of filing: **07.02.2003**

(51) Int Cl.:
*C09J 153/00* (2006.01)    *B32B 9/02* (2006.01)
*B32B 25/00* (2006.01)

(86) International application number:
**PCT/NL2003/000098**

(87) International publication number:
**WO 2003/066769 (14.08.2003 Gazette 2003/33)**

(54) **SOLVENT-FREE, HOT MELT ADHESIVE COMPOSITION COMPRISING A CONTROLLED DISTRIBUTION BLOCK COPOLYMER**

LÖSUNGSMITTELFREIE HEISSSCHMELZKLEBSTOFFZUSAMMENSETZUNG, DIE BLOCKCOPOLYMEREN MIT KONTROLLIERTER VERTEILUNG ENTHÄLT

COMPOSITION ADHESIVE THERMOFUSIBLE SANS SOLVANT COMPORTANT UN COPOLYMERE BLOC A DISTRIBUTION CONTROLEE

(84) Designated Contracting States:
**AT BE BG CH CY CZ DE DK EE ES FI FR GB GR HU IE IT LI LU MC NL PT SE SI SK TR**

(30) Priority: **07.02.2002 US 355210 P**
**31.07.2002 US 209285**

(43) Date of publication of application:
**10.11.2004 Bulletin 2004/46**

(73) Proprietor: **KRATON Polymers Research B.V.**
**1031 CM Amsterdam (NL)**

(72) Inventors:
• **HANDLIN, Dale, L., Jr.**
**Houston, TX 77077 (US)**
• **WILLIS, Carl, L.**
**Houston, TX 77084 (US)**

• **MAES, Caroline, R., N.**
**B-1348 Ottignies-LLN (BE)**

(74) Representative: **Kortekaas, Marcel C.J.A.**
**KRATON Polymers Research B.V.**
**P.O. Box 37666**
**1030 BH Amsterdam (NL)**

(56) References cited:
**EP-A- 0 822 227**        **GB-A- 1 193 627**
**US-A- 3 239 478**        **US-A- 6 034 159**

• **YIH-CHAU LIN ET AL: "using heavy ethers as structure modifiers in the synthesis of SBS block copolymers in cyclohexane" JOURNAL OF APPLIED POLYMER SCIENCE, JOHN WILEY AND SONS INC. NEW YORK, US, vol. 64, no. 13, 27 June 1997 (1997-06-27), pages 2543-2560, XP002084305 ISSN: 0021-8995**

**Description**

FIELD OF THE INVENTION

The present invention relates to a solvent-free hot melt adhesive composition suitable for bonding a polar leather layer to a non-polar substrate, its use, a process of bonding a polar leather layer to the non-polar substrate using the solvent-free, hot melt composition and to composed leather articles wherein the polar leather and non-polar substrate are bonded by the solvent-free hot melt adhesive composition.

More particularly, the invention relates to a solvent-free, hot melt adhesive composition suitable for bonding footwear components and to footwear so obtained.

BACKGROUND OF THE INVENTION

Adhesive compositions for bonding footwear are known in the art. Such known compositions comprise significant amounts of organic solvents. Due to increasingly stringent regulations from health, safety, and environmental authorities said organic solvents have to be eliminated. Unfortunately, the number of alternative adhesive compositions, which are suitable for bonding highly non-polar footwear components, such as bonding synthetic polymeric shoe soles to polar components such as leather uppers, is limited. In addition, the conventional bonding technology requires a pre-treatment of the surface of the non-polar substrates in order to obtain an adequate bonding with a primer. This is essential when using highly non-polar synthetic footwear components, made from e.g. polyolefins or styrenic block copolymers, and particularly hydrogenated styrenic block copolymers, e.g. KRATON® G-2705 block copolymer compositions.

An improved solvent-free adhesive compositions for bonding a polar leather layer to a non-polar substrate layer was disclosed in co-pending application EP02016728.4, which shows a combination of excellent bonding properties and more reliable applicability and processability and lower operational costs, e.g. by operating at lower processing temperatures or in an one step process, enabling shorter cycle times. The polymers described therein are grafted with maleic anhydride. These compositions have relative high HM (hot melt) viscosity and need high application temperatures of about 230 to 260°C.

Now a novel anionic block copolymer based on mono alkenyl arene end blocks and controlled distribution mid blocks of mono alkenyl arenes and conjugated dienes has been discovered and is described in copending, commonly assigned U.S. patent application Serial Number 60/355,210, entitled "NOVEL BLOCK COPOLYMERS AND METHOD FOR MAKING SAME". Methods for making such polymers are described in detail in the above-mentioned patent application.

There is a need for a solvent-free, hot melt adhesive composition suitable for bonding a polar leather layer to a non-polar substrate that possesses lower HM viscosity and needs application temperatures below 230°C. At the same time the required good bonding between the components must be maintained for a sufficiently long time, i.e. the lifetime of the produced shoes, leather suitcases, composed leather sporting articles such as golf bags and horse saddles, fashion articles (belts, handbags, briefcases). An object of the present invention is therefore to provide said solvent-free adhesive composition. Another object of the present invention is to provide a process for the manufacturing of composed products, comprising a polar leather component bonded to a non-polar synthetic or polymeric substrate component, and use of said solvent-free adhesive composition.

These and other objects were obtained by providing a new solvent-free hot melt adhesive composition.

SUMMARY OF THE INVENTION

Accordingly the invention relates to a solvent-free, hot melt adhesive composition suitable for bonding a polar leather layer to a non-polar substrate, comprising:

(a) a block copolymer having at least one A block and at least one B block, wherein:

(i) each A block independently is a mono alkenyl arene polymer block and each B block independently is a controlled distribution copolymer block of at least one conjugated diene and at least one mono alkenyl arene;
(ii) each A block having an average molecular weight between about 3,000 and about 60,000 and each B block having an average molecular weight between about 30,000 and about 300,000;
(iii) each B block comprises terminal regions adjacent to the A block that are rich in conjugated diene units and one or more regions not adjacent to the A blocks that are rich in mono alkenyl arene units; (iv)the total amount of mono alkenyl arene in the block copolymer is about 20 percent weight to about 80 percent weight; and
(v) the weight percent of mono alkenyl arene in each B block is between about 10 percent and about 75 percent;

(b) a hydrogenated hydrocarbon tackifying resin, with a softening point lower than 140°C, preferably lower than 100°C and more preferably lower than 90°C, in a weight proportion of 30 to 150 parts by weight of tackifying resin per 100 parts per weight of block copolymer and preferably from 50 to 120 parts by weight per 100 parts by weight of block copolymer;

(c) a resin which is compatible with the mono alkenyl arene blocks, having a softening point lower than 140°C and preferably lower than 110°C, in a weight proportion of from 10 to 80 parts by weight and preferably from 20 to 60 parts by weight of resin per 100 parts by weight of block copolymer;

(d) optionally a melt flow improving poly(alkylene) resin, which is functionalized, in a weight proportion of from 0 to 30 parts by weight, and preferably from 5 to 20 parts by weight per 100 parts by weight of block copolymer, and

(e) stabilizers and/or additional auxiliaries in a weight proportion of from 0.1 to 1 part by weight per 100 parts by weight of block copolymer.

## DETAILED DESCRIPTION OF THE INVENTION

Examples of non-polar substrates are compositions, particularly for shoe soles (or midsoles), comprising inter alia: vinylarene/conjugated diene block copolymers such as KRATON® D copolymers, hydrogenated vinylarene/conjugated diene block copolymers such as KRATON® G copolymers, vinylarene/ conjugated diene random copolymers, natural rubbers, poly(vinylarene), polyolefin, EVA copolymer, and/or mixtures thereof, optionally in admixture with oils and other auxiliaries.

The present invention makes use of novel compositions. The combination of (1) a unique control for the monomer addition and (2) the use of diethyl ether or other modifiers as a component of the solvent (which will be referred to as "distribution agents") results in a certain characteristic distribution of the two monomers (herein termed a "controlled distribution" polymerization, i.e., a polymerization resulting in a "controlled distribution" structure), and also results in the presence of certain mono alkenyl arene rich regions and certain conjugated diene rich regions in the polymer block. For purposes hereof, "controlled distribution" is defined as referring to a molecular structure having the following attributes: (1) terminal regions adjacent to the mono alkenyl arene homopolymer ("A") blocks that are rich in (i.e., have a greater than average amount of) conjugated diene units; (2) one or more regions not adjacent to the A blocks that are rich in (i.e., have a greater than average amount of) mono alkenyl arene units; and (3) an overall structure having relatively low blockiness. For the purposes hereof, "rich in" is defined as greater than the average amount, preferably greater than 5% the average amount. The relatively low blockiness can be shown by either the presence of only a single glass transition temperature ("Tg,") for the controlled distribution polymer block intermediate between the Tg's of either monomer alone, when analyzed using differential scanning calorimetry ("DSC") thermal methods or via mechanical methods, or as shown via proton nuclear magnetic resonance (1H-NMR) methods. The potential for blockiness can also be inferred from measurement of the UV-visible absorbance in a wavelength range suitable for the detection of polystyryl lithium end groups during the polymerization of the B block. A sharp and substantial increase in this value is indicative of a substantial increase in polystyryl lithium chain ends. In this process, this will only occur if the conjugated diene concentration drops below the critical level to maintain controlled distribution polymerization. Any styrene monomer that is present at this point will add in a blocky fashion. The term "styrene blockiness", as measured by those skilled in the art, using proton NMR, is defined to be the proportion of S units in the polymer having two S nearest neighbors on the polymer chain. The styrene blockiness is determined after using 1H-NMR to measure two experimental quantities as follows:

First, the total number of styrene units (i.e. arbitrary instrument units which cancel out when ratioed) is determined by integrating the total styrene aromatic signal in the 1H-NMR spectrum from 7.5 to 6.2 ppm and dividing this quantity by 5 to account for the 5 aromatic hydrogens on each styrene aromatic ring.

Second, the blocky styrene units are determined by integrating that portion of the aromatic signal in the 1H-NMR spectrum from the signal minimum between 6.88 and 6.80 to 6.2 ppm and dividing this quantity by 2 to account for the 2 ortho-hydrogens on each blocky styrene aromatic ring. The styrene blockiness is the percentage of blocky styrene to total styrene units:

```
Blocky %  = 100 times (Blocky Styrene Units / Total Styrene Units)
```

Expressed thus, Polymer-Bd-S-(S)n-S-Bd-Polymer, where n is greater than zero is defined to be blocky styrene. It is preferred that the blockiness index be less than about 40. For some polymers, having styrene contents of ten weight percent to forty weight percent, it is preferred that the blockiness index be less than about 10.

In a preferred embodiment of the present invention, the subject controlled distribution copolymer block has three distinct regions - conjugated diene rich regions on the end of the block and a mono alkenyl arene rich region near the middle or center of the block (mid-block). Preferred copolymers have the general configuration A-B, A-B-A, (A-B)n, (A-B)n-A, (A-B-A) nX, or (A-B) nX, wherein n is an integer from 2 to 30, preferably from 2 to 6, X is coupling agent residue and wherein A and B have the meaning defined hereinbefore. Best results are obtained with copolymers wherein at least one of A and B are hydrogenated. Preferably, the copolymers have a mid-block with 15 to 35% alkenyl arene, particularly styrene. More preferred these copolymers have a mid-block with 20-30% styrene.

In a preferred embodiment the solvent-free, hot melt adhesive composition further comprises at least one C block, wherein each C block is a polymer block of one or more conjugated dienes, having an average number molecular weight between 2,000 and 200,000.

To the adhesive composition an acid compound or its derivative may be grafted and/or it may be reacted with a silicon or boron-containing compound, with at least one ethylene oxide molecule, with at least one carbon dioxide molecule and/or which has been metallated with an alkali metal alkyl.

Preferably, the A block has a glass transition temperature of +80°C to +110°C and the B block has a glass transition temperature of above -60°C to less than the glass transition temperature of the A block, preferably between -40°C and +30°C.

The Young's modulus preferably is below 25% elongation of less than 2,800 psi (20 MPa) and the rubber modulus or slope is between 100 and 300% elongation of greater than 70 psi (0.5 MPa).

Preferably, at least one of the components of the block copolymer is at least partially hydrogenated, more preferably less than 10% of the arene double bonds are reduced and at least 90 % of the conjugated diene double bonds are reduced.

Anionic, solution copolymerization to form the controlled distribution copolymers of the present invention can be carried out using, to a great extent, known and previously employed methods and materials. In general, the copolymerization is attained anionically, using known selections of adjunct materials, including polymerization initiators, solvents, promoters, and structure modifiers, but as a key feature of the present invention, in the presence of a certain distribution agent. Such distribution agent is, in preferred embodiments, a non-chelating ether. Examples of such ether compounds are cyclic ethers such as tetrahydrofuran and tetrahydropyrane and aliphatic monoethers such as diethyl ether and dibutyl ether. Other distribution agents include, for example, ortho-dimethoxybenzene or "ODMB", which is sometimes referred to as a chelating agent.

An important aspect of the present invention is to control the microstructure or vinyl content of the conjugated diene in the controlled distribution copolymer block. The term "vinyl content" refers to the fact that a conjugated diene is polymerized via 1,2-addition (in the case of butadiene - it would be 3,4-addition in the case of isoprene). Although a pure "vinyl" group is formed only in the case of 1,2-addition polymerization of 1,3-butadiene, the effects of 3,4-addition polymerization of isoprene (and similar addition for other conjugated dienes) on the final properties of the block copolymer will be similar. The term "vinyl" refers to the presence of a pendant vinyl group on the polymer chain. When referring to the use of butadiene as the conjugated diene, it is preferred that about 20 to about 80 mol percent of the condensed butadiene units in the copolymer block have 1,2 vinyl configuration as determined by proton NMR analysis. For selectively hydrogenated block copolymers, preferably about 30 to about 70 mol percent of the condensed butadiene units should have 1,2 configuration. For unsaturated block copolymers, preferably about 20 to about 40 mol percent of the condensed butadiene units should have 1,2-vinyl configuration. This is effectively controlled by varying the relative amount of the distribution agent.

The solvent used as the polymerization vehicle may be any hydrocarbon that does not react with the living anionic chain end of the forming polymer, is easily handled in commercial polymerization units, and offers the appropriate solubility characteristics for the product polymer. For example, non-polar aliphatic hydrocarbons, which are generally lacking in ionizable hydrogens make particularly suitable solvents. Frequently used are cyclic alkanes, such as cyclopentane, cyclohexane, cycloheptane, and cyclooctane.

Starting materials for preparing the novel controlled distribution copolymers of the present invention include the initial monomers. The alkenyl arene can be selected from styrene, alpha-methylstyrene, para-methylstyrene, vinyl toluene, vinylnaphthalene, and para-butyl styrene or mixtures thereof. Of these, styrene is most preferred and is commercially available, and relatively inexpensive, from a variety of manufacturers. The conjugated dienes for use herein are 1,3-butadiene and substituted butadienes such as isoprene, piperylene, 2,3-dimethyl-1,3-butadiene, and 1-phenyl-1,3-butadiene, or mixtures thereof. Of these, 1,3-butadiene is most preferred. As used herein "butadiene" refers specifically to "1,3-butadiene".

Other important starting materials for anionic copolymerizations include one or more polymerization initiators. In the present invention such include, for example, alkyl lithium compounds and other organo lithium compounds such as s-butyl lithium, n-butyl lithium, t-butyl lithium, amyl lithium and the like, including di-initiators such as the di-sec-butyl lithium adduct of m-diisopropenyl benzene. Of the various polymerization initiators, s-butyl lithium is preferred.

Polymerization conditions to prepare the novel copolymers of the present invention are typically similar to those used for anionic polymerizations in general. In the present invention polymerization is preferably carried out at a temperature of from-30 to +150°C, more preferably +10 to +100°C, and most preferably, in view of industrial limitations, 30 to 90°C. It is carried out in an inert atmosphere preferably nitrogen, and may also be accomplished under pressure within the range of from about 0.5 to about 10 bars. This copolymerization generally requires less than about 12 hours, and can be accomplished in from about 5 minutes to about 5 hours, depending upon the temperature, the concentration of the monomer components, the molecular weight of the polymer and the amount of distribution agent that is employed.

The component (b) is actually blended with the block copolymer component (a) to provide tack. Examples of hydrogenated hydrocarbon tackifying resins which may be suitable applied in the adhesive compositions of the present invention are hydrogenated rosin esters, and more in particular the glycerol ester of hydrogenated rosin or pentaerythritol ester of hydrogenated rosin (e.g. FORAL™ 85E, FORALYNE™ 85E, or FORAL™ 105) or hydrogenated hydrocarbon resins (e.g., such as REGALITE™ R resins or ARKON M resins or ESCOREZ™ 5000 series or STABILITE™ resins). Preferably, diglycerol ester of highly hydrogenated resin (FORAL™ 85-E) is used as component (b) and more preferably in an amount of from 70 to 100 PHR.

As resin, which is compatible with resinous terminal block portions of the block copolymer (component c), an aromatic hydrocarbon resin can be used. Useful resins include coumarone-indene resins, poly(alpha-methyl styrene) resins, poly styrene resins or vinyl toluene-(alpha-methyl styrene) copolymers. Examples of aromatic hydrocarbon resins useful in the adhesive composition of the present invention are AMOCO 18 series resins, KRISTALEX™ series resins (e.g. KRISTALEX™ F100 or 3115), which are composed of alpha-methyl styrene (EASTMAN), PICCOTEX™ series resins which are composed of alpha-methyl styrene and vinyl toluene (EASTMAN), NEVCHEM™ (NEVILLE) and PICCO™ 6000 (EASTMAN) series resins which are composed of aromatic hydrocarbons, CUMAR™ series resins, e.g. CUMAR™ LX509 (NEVILLE) which are composed of coumarone-indene resins, HERCURES™ A101 resin (aromatic resin derived from aromatic petroleum (EASTMAN). As preferred resin component (c) HERCURES™ A101 resin or KRISTALEX™ F100 resin are used.

As optional component (d) can be used homopolymers of propylene or one or more crystalline copolymers of propylene, which contain 50 wt% or more propylene (e.g. ADFLEX™ copolymers, i.e. copolymers made of propylene and a further olefin by the CATALLOY™ process), or mixtures of the hereinbefore mentioned (co)polymers, which have been acid grafted and preferably with maleic acid or maleic anhydride. In preferred solvent-free, hot melt adhesive compositions said propylene (co)polymer is included more preferably in amounts of 5 to 20 parts by weight per 100 parts by weight of block copolymer. Preferred propylene copolymers are PP QESTRON™ KA 802A, PP QESTRON™ 805A, which are maleic anhydride grafted heterophasic PP copolymers of BASELL.

As component (e) can be used stabilizers, which are known from e.g. US Pat No 4,835,200. More in particular phenolic antioxidant (IRGANOX™), benzotriazole ultraviolet inhibitor (TINUVIN™ P) and a hindered amine ultraviolet inhibitor (TINUVIN™ 770) can be used to stabilize the formulation against degradation. Particularly preferred are hindered phenols and more preferred less volatile hindered phenols such as tetrakis[methylene-3,5-di-tert-butyl-4-hydroxy-hydrocinnamate]methane (IRGANOX™ 1010 antioxidant) or 2(3,5-di-tert-butyl-4-hydroxy)-4,6-bis(N-octylthio)-1,3,3-triazine (IRGANOX™ 565 antioxidant). TINUVIN™ P and IRGANOX™ 1010 are known to show synergistic effect in polymer stabilization.

It will be appreciated that the solvent-free, hot melt adhesive composition provides excellent bonding when applied at 150 to 230°C. Preferably, the bonding is provided when applying a temperature between 170 and 200°C. Moreover the bonded polar leather - non-polar synthetic material composites do not show any break upon repeatedly bending contrary to the composites made by using prior hot melt adhesive compositions. Therefore the adhesive compositions of the present invention have been found to provide attractive flexing endurance or resistance to flexing to footwear.

It will be appreciated that another aspect of the present invention is formed by the use of hereinbefore specified solvent-free, hot melt adhesive compositions for bonding a polar leather layer to a non-polar substrate. In particular said use relates to the bonding of shoe components and components of other formed leather articles such as suitcases, sporting articles and fashion articles, formed from a leather component and a synthetic polymeric non-polar component. More in particular said use relates to the bonding of shoe uppers and soles. In a more preferred use the shoe uppers are made of leather and the shoe soles are made of a non-polar polymeric material.

Moreover, the present invention is also relating to a process for bonding a polar leather layer to a non-polar synthetic polymeric layer, and more preferably shoe components, by the use of the hereinbefore-specified adhesive compositions of the invention. Such process may, and preferably is automated.

It will be appreciated that another aspect of the present invention is formed by the composed formed articles, such as shoes, handbags suitcases, derived from a polar leather component and a non-polar synthetic component, which have been bonded to each other with a hereinbefore defined adhesive composition.

The invention is further illustrated by the following examples, however without restricting its scope to these specific embodiments.

<u>Example 1</u>

Various controlled distribution copolymers of the present invention were prepared according to the process claimed herein. All polymers were selectively hydrogenated ABA block copolymers where the A blocks were polystyrene blocks and the B block prior to hydrogenation was a styrene/butadiene controlled distribution block copolymer having terminal regions that are rich in butadiene units and a center region that was rich in styrene units. The polymers were hydrogenated under standard conditions such that greater than 95% of the diene double bonds in the B block have been reduced.

The following describes the general procedure used to effectively control the distribution of the comonomers in the anionic copolymerization of 1,3-butadiene (Bd) and styrene (S) in the presence of diethyl ether (DEE). A number of tri-block copolymers were synthesized stepwise in cyclohexane. DEE was used to control the distribution of copolymerization of styrene and butadiene in the rubber mid-block. During the copolymerization step, a number of samples were collected as the reaction progressed to enable 1H-NMR characterization of the degree of comonomer distribution.

For Step I, an appropriate amount of polymerization grade cyclohexane was charged to a well-mixed 227 liter stainless steel reactor vessel at 30°C. Pressure' in the reactor vessel was controlled with nitrogen gas. Styrene monomer was charged to the reactor at 30°C. 10 ml increments of sec-butyl lithium (12 wt.%) were added to the reactor to titrate the cyclohexane and styrene monomer mixture. The titration endpoint was determined with an on-line colorimeter. After titration, sec-butyl lithium was then added to the reactor to initiate the anionic polymerization of the living polystyrene blocks. The temperature was allowed to increase to 55°C and the reaction was carried out to 99.9% conversion of the styrene. This completed the first styrene block of this block copolymer, (S)-.

For Step II, an appropriate amount of polymerization grade cyclohexane was charged to a well-mixed 492 liter stainless steel reactor vessel at 30°C. First, all of the styrene monomer required in the Step II reaction was charged to the reactor. Second, one-half of the butadiene monomer required in the Step II reaction was charged to the reactor. Third, an appropriate amount of diethyl ether was charged to the reactor. Fourth, 10 ml increments of sec-butyllithium (12 %wt.) were added to the reactor to titrate the cyclohexane, styrene monomer, butadiene monomer and diethyl ether mixture. The titration endpoint was determined with an on-line colorimeter. After titration of the Step II recatonts, the living polystyrene chains were transferred via nitrogen pressure from the Step I reactor vessel to the Step II reactor vessel to initiate the Step II copolymerization reaction of styrene and butadiene at 30°C. Ten minutes after the initiation of the copolymerization, the remaining one-half of the butadiene monomer was dosed to the Step II reactor at a rate that kept the overall polymerization rate nearly constant. The temperature was allowed to increase to 55°C and the reaction was carried out to 99.9% conversion basis butadiene kinetics. This completed the addition of a styrene-butadiene randomized mid-block to the Step I polystyrene block. The polymer structure at this point is (S)-(S/Bd)-.

For Step III, more styrene monomer was charged to the Step II reactor vessel at 55°C to react with the living (S)-(S/Bd)-polymer chains. The Step III reaction was maintained at near isothermal conditions until 99.9% conversion of the styrene. The living polymer chains were terminated by adding an appropriate amount (about 10% molar excess) of high-grade methanol to the final reactor solution. The final polymer structure was (S)-(S/Bd)-(S). All polymers were then selectively hydrogenated to produce linear ABA block copolymers where the A blocks were polystyrene blocks and the B block prior to hydrogenation was a styrene butadiene controlled distribution block having terminal regions that are rich in butadiene units and a center region that was rich in styrene units. The various polymers are shown in Table 1 below. Step I MW is the molecular weight of the first A block, Step II MW is the molecular weight of the AB blocks and Step III MW is the molecular weight of the ABA blocks. The polymers were hydrogenated such that greater than about 95% of the diene double bonds have been reduced.

This type of experiment was executed several times over a range of varying styrene-butadiene mid-block compositions. The following describes the method used to characterize the polymer mid or "B" block. It is the nature of the polymerization that the polymer mid-block is formed after an initial styrene block. Since the polymer mid-block which is formed in Step II cannot be analyzed in isolation, it must be analyzed in combination with the Step I styrene block, and the contribution of the Step I styrene block must be subtracted from the sum to determine the parameters which characterize the polymer mid-block. Four experimental quantities are used to calculate the percent styrene content in the polymer mid-block (Mid PSC) and the percent blocky styrene in the polymer mid-block (Mid Blocky). (Note: %BD12 for the mid-block is measured directly with no need to correct a BD contribution from the Step I styrene block). The total styrene mass in Step II is given by:

```
33.4 wt% of 86.8 k = 29.0 k styrene in Step II
```

The styrene mass of the mid-block is found by subtracting the Step I styrene mass from the styrene in Step II:

$$29.0 \text{ k} - 9.0 \text{ k} = 20.0 \text{ k styrene in mid-block}$$

The mass of the mid-block is given by subtracting the Step I MW from the Step II MW:

$$86.8 \text{ k} - 9.0 \text{ k} = 77.8 \text{ k mass if mid-block}$$

The "Mid PSC" is the percent of mid-block styrene relative to the mid-block mass:

$$100 * 20.0 \text{ k mid-block styrene} / 77.8 \text{ k mid-block mass} = 25.7 \text{ wt\%.}$$

The blocky styrene % and the Step II styrene mass gives the mass of blocky styrene:

$$33 \% \text{ of } 29.0 \text{ k} = 9.6 \text{ k Step II blocky styrene}$$

The Step I styrene block is subtracted from the mass of Step II blocky styrene to give the mass of blocky styrene in the mid-block:

$$9.6 \text{ k Step II blocky styrene} - 9.0 \text{ k Step I styrene block} = 0.6 \text{ k}$$

The "Mid Blocky" is the percent of blocky styrene in the mid-block relative to the styrene in the mid-block:

$$100 * 0.6 \text{ k mid-block blocky styrene} / 20.0 \text{ k mid-block styrene} = 3 \%$$

**Table 1. Controlled Distribution Polymers**

| Polymer Number | Step I MW (k) | Step II MW (k) | Step III MW (k) | % Styrene in Step II | Styrene Blockiness | 1,2-BD | PSC |
|---|---|---|---|---|---|---|---|
| | | | | | | (%) | (%) |
| 25 | 9.1 | 89 | 97 | 25 | 0 | 36 | 39 |
| 27 | 7.5 | 70 | 77 | 25 | 3 | 36.1 | 40 |
| 28 | 7.8 | 39 | - | 25 | 16 | 36 | 39 |
| 26 | 7.3 | 43 | 50 | 37 | 0 | 36.7 | 47 |
| where "MW(k)" = molecular weight in thousands and "PSC(%)" = wt % of styrene in the final polymer. "Styrene Blockiness" is for just the B block. | | | | | | | |

Example 2 (hypothetical preparation of a hot melt adhesive)

A typical solvent-free, hot melt adhesive composition according to the present invention comprises 125 parts by weight of the CD polymer, 100 parts by weight of a tackifying resin (e.g., Foralyne 85E), 50_parts by weight of of a resin (e.g., Hercules A101) and 3 parts by weight of an antioxidant (e.g., Irganox 1010). Typical compositions may further comprise polypropylene.

The solvent-free, hot melt adhesive composition may be prepared using a MARIS™ 30VI, 30 mm corotating twin screw extruder. The gravimetric feeders thereof, one for the polymer and two for the resin, can be equipped with a vibration tray. The processing of hot melts begins with pre-blending the polymer, the polypropylene if any and antioxidant. The pre-blend may then be added to the extruder via the first feeding port. At the second and third feeding port, part of the resins (1/3 to ½ of the total amount of resin) may be added.

The hot melt strand may be cut on a GALA™ granulator with a die plate temperature of 130°C and at a speed of 1500 rpm and cooled by water.

A hot melt adhesive composition prepared in line with the instructions above may be tested in line with common practice as applied by shoe producers. For instance, the sole/upper bonding may be tested by means of ROSSFLEX test bars (75 x 25 x 7 mm), which can be injection molded on a 200 kW BATTENFELD™ BA 200/50 CD molding machine and subsequently cut in two parts for use in the assembling lab test. Pre-buffed leather straps of similar dimension can be used.

A hot melt dispenser, equipped with a 2 mm thick slit die (10 mm wide), may be used to manually apply a hot melt layer onto non-primed compound test bars. Suitable hot melt application temperatures vary from 260° to 200°C. The adhesive application and bonding operation (including the positioning of the test bar onto the leather strap and time till applying full pressure) should be kept as short as possible to prevent the hot melt from cooling down and as such keep the hot melt viscosity as low as possible.

After hot melt application, the test bars and leather straps may be immediately pressed for 15 seconds at 12 kg/cm$^2$. In order to fix the bonds well, it may be necessary to apply pressure on the test assembly until the bond has built up sufficient strength to avoid separation upon removal from the press.

T-peel testing may be carried out according to the SATRA AM1 180°C T-peel test after storing the samples to be tested for at least 24 hours in a standard controlled environment at 21°C and 65 % relative humidity. The Peel tests may be carried out using the ZWICK™ tensile tester and at a rate of 100 mm/sec until a bond length of 30 mm had been peeled.

Example 3 (Illustrative Example)

Scouting experiments were conducted with CD polymers #25 and #27 (Table 1), in line with the instructions of Example 2. The hot melt adhesives were compared with the adhesive of co-pending application EP02016728.4, albeit that the block copolymer of the comparative composition has a lower molecular weight and has been grafted with maleic anhydride.

Adhesion values were found for the composition according to the invention that exceed the industry requirement of 5 N/mm and that are higher than those obtained using the comparative composition (6.8 N/mm for #25 and 8.2 N/mm for #27 vs. 4.3 N/mm when applied on a standard non-primed sole substrate (based on an unhydrogenated SBC) at 230°C.). When applied at 200°C, the composition based on #27 still achieved a peel load of 5.9 N/mm vs. 2.0 N/mm for the comparative composition. Indeed, a peel load of 5.9 was even achieved when the composition comprising #27 was applied at 190° (on a non-primed sole substrate based on a hydrogenated SBC)

Example 4 (Illustrative Example)

Scouting experiments were also conducted with CD polymer #27, in line with the instructions of Example 2 in a composition comprising 100 parts of polymer and 12.5 parts of a polypropylene (Questron KA 805A). Again, the hot melt adhesive was compared with the adhesive of co-pending application EP02016728.4.

When applied on a non-primed sole substrate based on a hydrogenated SBC, excellent peel load was achieved with the composition according to the invention, even at low application temperatures: 5.0 N/mm @ 190°C (vs. 3.2 N/mm for the comparative); 5.7 N/mm @ 200°C (vs. 3.8 N/mm) and 8.7 N/mm @ 230°C (vs. 4.4 N/mm). Similar results were obtained when applied on a non-primed sole substrate based on a unhydrogenated SBC.

**Claims**

1. A solvent-free, hot melt adhesive composition suitable for bonding a polar leather layer to a non-polar substrate, comprising:

    (a) a block copolymer having at least one A block and at least one B block, wherein:

        (i) each A block is a mono alkenyl arene polymer block and each B block is a controlled distribution copolymer block of at least one conjugated diene and at least one mono alkenyl arene;
        (ii) each A block having an average molecular weight between about 3,000 and about 60,000 and each B block having an average molecular weight between about 30,000 and about 300,000;

(iii) each B block comprises terminal regions adjacent to the A block that have a greater than average amount of conjugated diene units and one or more regions not adjacent to the A blocks that have a greater than average amount of mono alkenyl arene units;

(iv) the total amount of mono alkenyl arene in the block copolymer is about 20 percent weight to about 80 percent weight; and

(v) the weight percent of mono alkenyl arene in each B block is between about 10 percent and about 75 percent;

(b) a hydrogenated hydrocarbon tackifying resin, with a softening point lower than 140°C, preferably lower than 100°C and more preferably lower than 90°C, in a weight proportion of 30 to 150 parts by weight of tackifying resin per 100 parts per weight of block copolymer and preferably from 50 to 120 parts by weight per 100 parts by weight of block copolymer;

(c) a resin which is compatible with the mono alkenyl arene blocks, having a softening point lower than 140°C and preferably lower than 110°C, in a weight proportion of from 10 to 80 parts by weight and preferably from 20 to 60 parts by weight of resin per 100 parts by weight of block copolymer;

(d) optionally a melt flow improving poly(alkylene) resin, which is functionalized, in a weight proportion of from 0 to 30 parts by weight, and preferably from 5 to 20 parts by weight per 100 parts by weight of block copolymer, and

(e) stabilizers and/or additional auxiliaries in a weight proportion of from 0.1 to 1 part by weight per 100 parts by weight of block copolymer.

2. The solvent-free, hot melt adhesive composition of claim 1 wherein in the block copolymer (a) mono alkenyl arene is styrene and the conjugated diene is isoprene, butadiene, or a mixture thereof.

3. The solvent-free, hot melt adhesive composition of claim 1 or 2 wherein in the block copolymer (a) the conjugated diene is butadiene and wherein 20 to 80 mol percent of the condensed butadiene units in block B have 1,2-configuration.

4. The solvent-free, hot melt adhesive composition of any one of claims 1-3 wherein in the block copolymer (a) the styrene blockiness index of the block B is less than 40 percent, said styrene blockiness index being the proportion of styrene units in the block B having two styrene neighbors on the polymer chain.

5. The solvent-free, hot melt adhesive composition of any one of claims 1-6 wherein the block copolymer (a) has the general configuration A-B, A-B-A, (A-B)n, (A-B)n-A, (A-B-A)nX, or (A-B)nX, wherein n is an integer from 2 to 30, preferably from 2 to 6, X is coupling agent residue and wherein A and B have the meaning defined hereinbefore.

6. The solvent-free, hot melt adhesive composition of any one of claims 1-5 wherein the block copolymer (a) has a Young's modulus below 25% elongation of less than 2,800 psi (20 MPa) and having a rubber modulus or slope between 100 and 300% elongation of greater than 70 psi (0.5 MPa).

7. The solvent-free, hot melt adhesive composition of any one of claims 1-6 wherein component (b) comprises hydrogenated rosin esters and preferably diglycerol esters or pentaerythritol esters of hydrogenated rosin, or hydrogenated hydrocarbon resin, and is present in a weight proportion of from 50 to 120 parts by weight resin per 100 parts by weight of block copolymer.

8. The solvent-free, hot melt composition of any one of claims 1-7 wherein component (c) comprises an aromatic hydrocarbon resin.

9. The solvent-free, hot melt composition of claim 7 wherein component (c) comprises at least one of coumarone-indene resins, poly(alpha-methyl-styrene) resins, poly styrene resins, and vinyl toluene-(alpha-methyl-styrene) copolymers.

10. Use of the solvent-free, hot melt adhesive composition of any one of claims according to claims 1-9 for bonding a polar leather layer to a non-polar substrate.

11. Use according to claim 10 for bonding polar leather shoe uppers to non-polar polymeric material soles.

12. Use according to claim 11 for bonding polar leather shoe uppers to shoe soles or midsoles that are made from vinylarene/conjugated diene block copolymers, hydrogenated vinylarene/conjugated diene block copolymers, vinylarene/conjugated diene random copolymers, natural rubbers, poly(vinylarene), polyolefin, EVA copolymer, and/or mixtures thereof, optionally in admixture with oils and other auxiliaries.

13. Leather articles, composed of a polar leather component and a non-polar substrate, which are bonded to each other by the solvent-free, hot melt adhesive compositions of any one of claims 1-9.

14. Process for bonding a polar leather layer to a non-polar substrate, by using the solvent-free, hot melt adhesive compositions of any one of claims 1-9.

**Patentansprüche**

1. Lösungsmittelfreie Heißschmelzklebstoffzusammensetzung geeignet für die Verklebung einer polaren Lederschicht auf ein nicht polares Substrat, umfassend:

a) ein Blockcopolymer, das wenigstens einen A-Block und wenigstens einen B-Block aufweist, worin:

i) jeder A-Block ein Monoalkenylarenpolymer-Block ist und jeder B-Block ein Copolymer-Block mit kontrollierter Verteilung von wenigstens einem konjugierten Dien und wenigstens einem Monoalkenylaren;
ii) jeder A-Block ein Durchschnittsmolekulargewicht zwischen ungefähr 3.000 und ungefähr 60.000 aufweist und jeder B-Block ein Durchschnittsmolekulargewicht zwischen ungefähr 30.000 und ungefähr 300.000 aufweist;
iii) jeder B-Block endständige Regionen umfasst, die zum A-Block benachbart sind, die mehr als die durchschnittliche Menge konjugierter Dieneinheiten aufweisen und ein oder mehrere Regionen, die nicht zu den A-Blöcken benachbart sind, die mehr als die Durchschnittsmenge von Monoalkenylareneinheiten aufweisen;
iv) die Gesamtmenge an Monoalkenylaren im Blockcopolymer ungefähr 20 Gew.-% bis ungefähr 80 Gew.-% beträgt;
v) der Gewichtsprozentanteil des Monoalkenylarens in jedem B-Block zwischen ungefähr 10% und ungefähr 75% ist;

b) ein hydriertes Kohlenwasserstoffharz zur Erhöhung der Klebrigkeit mit einem Erweichungspunkt von weniger als 140°C, vorzugsweise von weniger als 100°C und am meisten bevorzugt von weniger als 90°C, in einem Gewichtsverhältnis von 30 bis 150 Gewichtsteilen des Harzes zur Erhöhung der Klebrigkeit auf 100 Gewichtsteile des Blockcopolymers, und vorzugsweise von 50 bis 120 Gewichtsteile auf 100 Gewichtsteile des Blockcopolymers;
c) ein Harz, das mit dem Monoalkenylarenblöcken kompatibel ist und einen Erweichungspunkt von weniger als 140°C aufweist und vorzugsweise niedriger als 110°C in einem Gewichtsverhältnis von 10 bis 80 Gewichtsteile und vorzugsweise von 20 bis 60 Gewichtsteile Harz auf 100 Gewichtsteile Blockcopolymer;
d) gegebenenfalls ein funktionalisiertes Poly(alkylen)harz zur Verbesserung des Schmelzflusses, in einem Gewichtsverhältnis von 0 bis 30 Gewichtsteile und vorzugsweise von 5 bis 20 Gewichtsteile auf 100 Gewichtsteile Blockcopolymer und
e) Stabilisatoren und/oder weitere Zusatzmittel in einem Gewichtsverhältnis von 0,1 bis 1 Gewichtsteile auf 100 Gewichtsteile des Blockcopolymers.

2. Lösungsmittelfreie Heißschmelzklebstoffzusammensetzung nach Anspruch 1, worin das Monoalkenylaren im Blockcopolymer (a) Styrol ist und das konjugierte Dien Isopren, Butadien oder eine Mischung davon.

3. Lösungsmittelfreie Heißschmelzklebstoffzusammensetzung nach Anspruch 1 oder 2, worin das konjugierte Dien im Blockcopolymer (a) Butadien ist und worin 20 bis 80 mol% der kondensierten Butadieneinheiten in Block B eine 1,2-Konfiguration aufweisen.

4. Lösungsmittelfreie Heißschmelzklebstoffzusammensetzung nach einem der Ansprüche 1 bis 3, worin im Blockcopolymer (a) der Styrolblöckigkeitsindex des Blocks B weniger als 40% beträgt und wobei der Styrolblockindex das Verhältnis der Styroleinheiten im Block B ist, die zwei Styrolnachbarmoleküle auf der Polymerkette aufweisen.

5. Lösungsmittelfreie Heißschmelzklebstoffzusammensetzung nach einem der Ansprüche 1 bis 4, worin das Blockcopolymer (a) die allgemeine Konfiguration A-B, A-B-A, (A-B)n, (A-B)n-A, (A-B-A)nX oder (A-B)nX aufweist, worin n eine ganze Zahl von 2 bis 30 ist, vorzugsweise von 2 bis 6, X ist ein Rest eines Kopplungsmittels, und worin A und B die vorstehend definierte Bedeutung haben.

6. Lösungsmittelfreie Heißschmelzklebstoffzusammensetzung nach einem der Ansprüche 1 bis 5, worin das Blockcopolymer (a) ein Young-Modul unterhalb 25% Dehnung von weniger als 2.800 psi (20 MPa) aufweist und einen Gummi-Modul oder eine Gummineigung zwischen 100 und 300% Dehnung von mehr als 70 psi (0,5 MPa) aufweist.

7. Lösungsmittelfreie Heißschmelzklebstoffzusammensetzung nach einem der Ansprüche 1 bis 6, worin Bestandteil (b) hydrierten Harzsäureester und vorzugsweise Diglycolester oder Pentaerythritolester hydrierten Harzes oder hydrierte Kohlenwasserstoffharze umfasst und in einem Gewichtsverhältnis von 50 bis 120 Teile Harz auf 100 Gewichtsteile des Blockcopolymers vorhanden ist.

8. Lösungsmittelfreie Heißschmelzzusammensetzung nach einem der Ansprüche 1 bis 7, worin Bestandteil (c) ein aromatisches Kohlenwasserstoffharz umfasst.

9. Lösungsmittelfreie Heißschmelzzusammensetzung nach Anspruch 7, worin Bestandteil (c) wenigstens eines aus Cumaron-Inden-Harzen, Poly(alpha-methyl-styrol)harzen, Polystyrolharzen und Vinyltoluol-(alpha-methylstyrol)copolymere umfasst.

10. Verwendung der lösungsmittelfreien Heißschmelzklebstoffzusammensetzung gemäß den Ansprüchen 1 bis 9 zur Verklebung einer polaren Lederschicht auf einem unpolaren Substrat.

11. Verwendung nach Anspruch 10 zur Verklebung polarer Lederschuhoberteile auf Sohlen aus unpolarem Polymermaterial.

12. Verwendung nach Anspruch 11 zur Verklebung polarer Lederschuhoberteile auf Schuhsohlen oder Mittelsohlen, die hergestellt sind aus Vinylaren/konjugierten Dien Block-Copolymeren, hydriertem Vinylaren/konjugierten Dien Block-Copolymeren, Vinylaren/konjugierten Dien Zufallscopolymeren, natürlichen Gummis, Poly(vinylaren), Polyolefin, EVA Copolymer und/oder Mischungen davon, gegebenenfalls in Mischungen mit Ölen oder anderen Zusatzmitteln.

13. Lederartikel, bestehend aus einem polaren Lederbestandteil und einem unpolaren Substrat, die durch die lösungsmittelfreien Heißschmelzklebstoffzusammensetzungen nach einem der Ansprüche 1 bis 9 aneinander verklebt sind.

14. Verfahren zum Verkleben einer polaren Lederschicht auf ein unpolares Substrat unter Verwendung der lösungsmittelfreien Heißschmelzklebstoffzusammensetzungen nach einem der Ansprüche 1 bis 9.

## Revendications

1. Composition adhésive thermofusible, sans solvant convenant pour le collage d'une couche de cuir polaire à un substrat non polaire, comprenant :

   (a) un copolymère bloc comportant au moins un bloc A et au moins un bloc B, dans lequel :

      (i) chaque bloc A est un bloc de polymère de monoalcényl arène et chaque bloc B est un bloc de copolymère à distribution contrôlée d'au moins un diène conjugué et d'au moins un monoalcényl arène;
      (ii) chaque bloc A ayant un poids moléculaire moyen entre environ 3 000 et environ 60 000 et chaque bloc B ayant un poids moléculaire moyen entre environ 30 000 et environ 300 000;
      (iii) chaque bloc B comprend des zones terminales adjacentes au bloc A qui ont une quantité plus grande que la moyenne d'unités de diène conjugué et une ou plusieurs zones non adjacentes aux blocs A qui ont une quantité plus grande que la moyenne d'unités de monoalcényl arène;
      (iv) la quantité totale de monoalcényl arène dans le copolymère bloc est d'environ 20 % en poids à environ 80 % en poids; et
      (v) le pourcentage en poids de monoalcényl arène dans chaque bloc B se situe entre environ 10 % et environ 75 %;

(b) une résine hydrocarbonée hydrogénée assurant un collage, avec un point de ramollissement de moins de 140°C, avantageusement de moins de 100°C et plus avantageusement de moins de 90°C, dans une proportion pondérale de 30 à 150 parties en poids de résine assurant un collage pour 100 parties en poids de copolymère bloc et avantageusement de 50 à 120 parties pour 100 parties en poids de copolymère bloc;

(c) une résine qui est compatible avec les blocs de monoalcényl arène, ayant un point de ramollissement de moins de 140°C et avantageusement de moins de 110°C, dans une proportion pondérale de 10 à 80 parties en poids et avantageusement de 20 à 60 parties en poids de résine pour 100 parties en poids de copolymère bloc;

(d) éventuellement une résine de poly(alkylène) améliorant la fluidité, qui est fonctionnalisée, dans une proportion pondérale de 0 à 30 parties en poids, et avantageusement de 5 à 20 parties en poids pour 100 parties en poids de copolymère bloc, et

(e) des stabilisants et/ou des agents auxiliaires additionnels dans une proportion pondérale de 0,1 à 1 partie en poids pour 100 parties en poids de copolymère bloc.

2. Composition adhésive thermofusible, sans solvant suivant la revendication 1, dans laquelle dans le copolymère bloc (a) le monoalcényl arène est du styrène et le diène conjugué est de l'isoprène, du butadiène ou un mélange de ceux-ci.

3. Composition adhésive thermofusible, sans solvant suivant l'une ou l'autre des revendications 1 et 2, dans laquelle dans le copolymère bloc (a) le diène conjugué est du butadiène et dans laquelle 20 à 80 moles % des unités de butadiène condensées dans le bloc B ont une configuration en 1,2.

4. Composition adhésive thermofusible, sans solvant suivant l'une quelconque des revendications 1 à 3, dans laquelle dans le copolymère bloc (a) l'indice de formation en bloc de styrène du bloc B est inférieur à 40 %, ledit indice de formation en bloc de styrène étant la proportion d'unités de styrène dans le bloc B comportant deux styrènes voisins sur la chaîne de polymère.

5. Composition adhésive thermofusible, sans solvant suivant l'une quelconque des revendications 1 à 4, dans laquelle le copolymère bloc (a) a la configuration générale A-B, A-B-A, (A-B)n, (A-B)n-A, (A-B-A)nX ou (A-B)nX, dans laquelle n est un nombre entier de 2 à 30, avantageusement de 2 à 6, X est un résidu d'agent de couplage et dans laquelle A et B ont la signification donnée précédemment.

6. Composition adhésive thermofusible, sans solvant suivant l'une quelconque des revendications 1 à 5, dans laquelle le copolymère bloc (a) a un module de Young en dessous de 25 % d'allongement de moins de 2 800 psi (20 MPa) et ayant un module de caoutchouc ou une pente entre 100 et 300 % d'allongement de plus de 70 psi (0,5 MPa).

7. Composition adhésive thermofusible, sans solvant suivant l'une quelconque des revendications 1 à 6, dans laquelle le composant (b) comprend des esters de colophane hydrogénée et avantageusement des esters de diglycérol ou des esters de pentaérythritol de colophane hydrogénée, ou une résine hydrocarbonée hydrogénée, et est présent dans une proportion pondérale de 50 à 120 parties en poids de résine pour 100 parties en poids de copolymère bloc.

8. Composition thermofusible, sans solvant suivant l'une quelconque des revendications 1 à 7, dans laquelle le composant (c) comprend une résine hydrocarbonée aromatique.

9. Composition thermofusible, sans solvant suivant la revendication 7, dans laquelle le composant (c) comprend au moins une matière parmi les résines de coumarone-indène, les résines de poly-(alpha-méthylstyrène), les résines de polystyrène et les copolymères de vinyl toluène-(alpha-méthylstyrène).

10. Utilisation de la composition adhésive thermofusible, sans solvant suivant l'une quelconque des revendications 1 à 9, pour coller une couche de cuir polaire à un substrat non polaire.

11. Utilisation suivant la revendication 10, pour coller de la matière pour tiges de cuir polaire à des semelles de matière polymérique non polaire.

12. Utilisation suivant la revendication 11, pour coller de la matière pour tiges de cuir polaire à des semelles de chaussure ou des semelles médianes qui sont faites de copolymères blocs de vinylarène/diène conjugué, de copolymères blocs de vinylarène/diène conjugué hydrogénés, de copolymères aléatoires de vinylarène/diène conjugué, de caoutchoucs naturels, de poly(vinylarène), de polyoléfine, de copolymère d'EVA et/ou de leurs mélanges, éventuellement en mélange avec des huiles et d'autres agents auxiliaires.

**13.** Articles de cuir, composés d'un composant de cuir polaire et d'un substrat non polaire, qui sont collés l'un à l'autre par les compositions adhésives thermofusibles, sans solvant suivant l'une quelconque des revendications 1 à 9.

**14.** Procédé de collage d'une couche de cuir polaire à un substrat non polaire, par l'utilisation des compositions adhésives thermofusibles, sans solvant suivant l'une quelconque des revendications 1 à 9.